# EUROPÄISCHE PATENTSCHRIFT

(11) **EP 4 014 441 B1**
(45) Veröffentlichungstag und Bekanntmachung des Hinweises auf die Patenterteilung: **07.12.2022**
(21) Anmeldenummer: 20768002.6
(22) Anmeldetag: 03.09.2020
(51) Int. Cl.: H04L 12/40, H04J 3/06

(54) **VERFAHREN ZUR ZEITSYNCHRONISATION IN EINEM ETHERNET-BASIERTEN NETZWERK**
METHOD FOR TIME SYNCHRONIZATION IN AN ETHERNET-BASED NETWORK
PROCÉDÉ DE SYNCHRONISATION TEMPORELLE DANS UN RÉSEAU BASÉ SUR ETHERNET

(30) Priorität: 23.09.2019 DE 102019125529
(43) Veröffentlichungstag der Anmeldung: 22.06.2022
(73) Patentinhaber: Beckhoff Automation GmbH, 33415 Verl (DE)
(72) Erfinder: BÜTTNER, Holger, 12205 Berlin (DE); JANSSEN, Dirk, 33415 Verl (DE); VONNAHME, Erik, 33154 Salzkotten (DE); BECKHOFF, Hans, 33415 Verl (DE); RETTIG, Thomas, 33378 Rheda-Wiedenbrück (DE); BUNTE, Thorsten, 33335 Gütersloh (DE); BECKHOFF, Johannes, 33758 Schloß Holte-Stukenbrock (DE); BECKMANN, Guido, 33415 Verl (DE); WEBER, Karl, 90518 Altdorf (DE)
(74) Vertreter: Patentanwaltskanzlei WILHELM & BECK
(86) Internationale Anmeldenummer: PCT/EP2020/074545
(87) Internationale Veröffentlichungsnummer: WO 2021/058247

(56) Entgegenhaltungen:
- US-A1- 2011 170 534
- US-A1- 2018 227 068
- HYUNTAE CHO ET AL: "Implementation of a PTP Bridge to Extend IEEE 1588 to Zigbee Networks", COMPUTER AND INFORMATION TECHNOLOGY (CIT), 2010 IEEE 10TH INTERNATIONAL CONFERENCE ON, IEEE, PISCATAWAY, NJ, USA, 29. Juni 2010 (2010-06-29), Seiten 2604-2611, XP031757844, ISBN: 978-1-4244-7547-6

## Beschreibung

Die vorliegende Erfindung betrifft ein Verfahren zur Zeitsynchronisation in einem Ethernet-basierten Netzwerk.

Diese Patentanmeldung beansprucht die Priorität der deutschen Patentanmeldung DE 10 2019 125 529.5.

Datennetzwerke sind aus dem Stand der Technik bekannt. Kabelgebundene Datennetzwerke nach dem Stand der Technik basieren häufig auf dem Ethernet-Standard. Unter dem Oberbegriff "Industrial Ethernet" ist es im Stand der Technik bekannt, Ethernet-Datennetzwerke zur Vernetzung von Geräten in der industriellen Fertigung und der Automatisierungstechnik zu nutzen. Solche Datennetzwerke können beispielsweise auf dem EtherCAT-Standard basieren. Solche Datennetzwerke können auch als Feldbus bezeichnet werden.

Für bestimmte Steuerungsaufgaben ist es notwendig, dass alle an dieser Steuerungsaufgabe beteiligten und über einen Feldbus vernetzten Geräte dieselbe Uhrzeit benutzen.

Dabei kann beispielsweise gefordert sein, dass die Uhrzeiten der einzelnen Geräte um maximal 1 µs voneinander abweichen sollen. Um dies zu gewährleisten, ist es bekannt, bei Feldbussen eine zyklische Zeitsynchronisation durchzuführen.

Bei Ethernet-basierten Netzwerken mit Zeitsynchronisation nach dem Stand der Technik ist es bekannt, während einer Initialisierungsphase des Netzwerks eine Vielzahl von mehreren tausend Synchronisationsschritten durchzuführen, um die Ganggeschwindigkeiten der Zeitgeber der einzelnen Teilnehmer des Netzwerks im Sinne einer Regelung an eine vorgegebene Referenz anzugleichen.

Die US 2017/0346588 A1 beschreibt ein Verfahren zur Synchronisation der Uhren von Netzwerkteilnehmern, die jeweils mindestens eine Uhr aufweisen. Die Synchronisation erfolgt mittels mehrerer Synchronisationsnachrichten.

Die US 2017/0195109 A1 beschreibt ein Verfahren zur Uhrensynchronisation, bei dem ein Uhrenversatz auf Grundlage gemessener Übertragungs- und Empfangszeiten ermittelt wird.

Die Veröffentlichung HYUNTAE CHO ET AL: "Implementation of a PTP Bridge to Extend IEEE 1588 to Zigbee Networks", COMPUTER AND INFORMATION TECHNOLOGY (CIT), 2010 IEEE 10TH INTERNATIONAL CONFERENCE ON, IEEE, PISCATAWAY, NJ, USA, 29. Juni 2010 (2010-06-29), Seiten 2604-2611, XP031757844, ISBN: 978-1-4244-7547-6 Section "IV. EXPERIMENT AND PERFORMANCE EVALUATION" beschreibt eine Möglichkeit, das IEEE-1588-Protokoll mittels einer PTP-Brücke auf Zigbee-Netzwerke zu erweitern.

Die US 2011/170534 A1 beschreibt eine Vorrichtung mit mindestens zwei Einheiten, die über das IEEE-1588-Protokoll synchronisiert werden können.

Eine Aufgabe der vorliegenden Erfindung besteht darin, ein Verfahren zur Zeitsynchronisation in einem Ethernet-basierten Netzwerk anzugeben. Diese Aufgabe wird durch ein Verfahren mit den Merkmalen des unabhängigen Patentanspruchs gelöst. In den abhängigen Ansprüchen sind verschiedene Weiterbildungen angegeben.

Ein Verfahren zur Zeitsynchronisation in einem Ethernet-basierten Netzwerk, das zumindest einen Master-Netzwerkteilnehmer und einen Slave-Netzwerkteilnehmer aufweist, umfasst Schritte zum Aussenden eines ersten Telegramms durch den Master-Netzwerkteilnehmer, wobei der Slave-Netzwerkteilnehmer das erste Telegramm zu einem ersten Empfangszeitwert einer lokalen Systemzeit des Slave-Netzwerkteilnehmers empfängt und den ersten Empfangszeitwert abspeichert, zum Auslesen des ersten Empfangszeitwerts durch den Master-Netzwerkteilnehmer, zum Aussenden eines zweiten Telegramms durch den Master-Netzwerkteilnehmer, wobei der Slave-Netzwerkteilnehmer das zweite Telegramm zu einem zweiten Empfangszeitwert der lokalen Systemzeit des Slave-Netzwerkteilnehmers empfängt und den zweiten Empfangszeitwert abspeichert, zum Auslesen des zweiten Empfangszeitwerts durch den Master-Netzwerkteilnehmer, zum Berechnen eines Geschwindigkeitsparameters der lokalen Systemzeit des Slave-Netzwerkteilnehmers aus den Empfangszeitwerten durch den Master-Netzwerkteilnehmer und zum Übertragen des Geschwindigkeitsparameters an den Slave-Netzwerkteilnehmer.

Vorteilhafterweise erlaubt dieses Verfahren eine direkte Messung einer Gangabweichung der lokalen Systemzeit des Slave-Netzwerkteilnehmers und dadurch eine direkte und sehr genaue Anpassung der Ganggeschwindigkeit der lokalen Systemzeit des Slave-Netzwerkteilnehmers. Dadurch ermöglicht das Verfahren vorteilhafterweise eine sehr schnelle Korrektur einer Gangabweichung der lokalen Systemzeit des Slave-Netzwerkteilnehmers.

In einer Ausführungsform des Verfahrens weist das Netzwerk einen Referenzzeitgeber auf. Dabei empfängt der Referenzzeitgeber das erste Telegramm zu einem ersten Referenzzeitwert einer lokalen Systemzeit des Referenzzeitgebers und speichert den ersten Referenzzeitwert ab. Der erste Referenzzeitwert wird durch den Master-Netzwerkteilnehmer ausgelesen. Der Referenzzeitgeber empfängt das zweite Telegramm zu einem zweiten Referenzzeitwert der lokalen Systemzeit des Referenzzeitgebers und speichert den zweiten Referenzzeitwert ab. Auch der zweite Referenzzeitwert wird durch den Master-Netzwerkteilnehmer ausgelesen. Anschließend wird der Geschwindigkeitsparameter aus dem ersten und zweiten Empfangszeitwert und dem ersten und zweiten Referenzzeitwert berechnet. Liegen die Empfangszeitwerte weiter auseinander als die Referenzzeitwerte, so läuft die lokale Systemzeit des Slave-Netzwerkteilnehmers zu schnell ab. Ist die Differenz zwischen den Empfangszeitwerten kleiner als die Differenz zwischen den Referenzzeitwerten, so läuft die lokale Systemzeit des Slave-Netzwerkteilnehmers zu langsam ab. Als Referenzzeitgeber des Netzwerks kann beispielsweise ein Slave-Netzwerkteilnehmer des Netzwerks fungieren, insbesondere beispielsweise der erste Slave-Netzwerkteilnehmer in dem Netzwerk.

In einer anderen Ausführungsform des Verfahrens sendet der Master-Netzwerkteilnehmer das erste Telegramm zu einem ersten Referenzzeitwert einer Systemzeit des Master-Netzwerkteilnehmers aus. Das zweite Telegramm sendet der Master-Netzwerkteilnehmer zu einem zweiten Referenzzeitwert der Systemzeit des Master-Netzwerkteilnehmers aus. Dabei wird der Geschwindigkeitsparameter aus den Empfangszeitwerten und den Referenzzeitwerten berechnet. In dieser Ausführungsform fungiert der Master-Netzwerkteilnehmer selbst als Referenzzeitgeber des Netzwerks.

In einer Ausführungsform des Verfahrens berechnet der Master-Netzwerkteilnehmer eine Referenzzeitdifferenz als Differenz zwischen dem ersten Referenzzeitwert und dem zweiten Referenzzeitwert und eine Empfangszeitdifferenz als Differenz zwischen dem ersten Empfangszeitwert und dem zweiten Empfangszeitwert. Dabei berechnet der Master-Netzwerkteilnehmer den Geschwindigkeitsparameter aus der Referenzzeitdifferenz und der Empfangszeitdifferenz. Vorteilhafterweise kann durch einen Vergleich der Referenzzeitdifferenz und der Empfangszeitdifferenz nicht nur festgestellt werden, ob die lokale Systemzeit des Slave-Netzwerkteilnehmers zu schnell oder zu langsam abläuft. Es kann auch direkt berechnet werden, um welchen Faktor die Ganggeschwindigkeit der lokalen Systemzeit von dem gewünschten Sollwert abweicht. Dies ermöglicht vorteilhafterweise eine direkte und sehr genaue Korrektur der Ganggeschwindigkeit der lokalen Systemzeit des Slave-Netzwerkteilnehmers.

Das Netzwerk weist einen weiteren Slave-Netzwerkteilnehmer auf. Der weitere Slave-Netzwerkteilnehmer empfängt das erste Telegramm zu einem weiteren ersten Empfangszeitwert einer lokalen Systemzeit des weiteren Slave-Netzwerkteilnehmers und speichert den weiteren ersten Empfangszeitwert ab. Der weitere erste Empfangszeitwert wird durch den Master-Netzwerkteilnehmer ausgelesen. Das zweite Telegramm empfängt der weitere Slave-Netzwerkteilnehmer zu einem weiteren zweiten Empfangszeitwert der lokalen Systemzeit des weiteren Slave-Netzwerkteilnehmers und speichert den weiteren zweiten Empfangszeitwert ab. Auch der weitere zweite Empfangszeitwert wird durch den Master-Netzwerkteilnehmer ausgelesen. Dann berechnet der Master-Netzwerkteilnehmer einen weiteren Geschwindigkeitsparameter der lokalen Systemzeit des weiteren Slave-Netzwerkteilnehmers aus den weiteren Empfangszeitwerten und überträgt den weiteren Geschwindigkeitsparameter an den weiteren Slave-Netzwerkteilnehmer. Damit ermöglicht das Verfahren vorteilhafterweise auch eine Korrektur der Ganggeschwindigkeit der Iokalen Systemzeit des weiteren Slave-Netzwerkteilnehmers. Auf analoge Weise kann das Verfahren auch noch für eine Mehrzahl weiterer Slave-Netzwerkteilnehmer des Netzwerks durchgeführt werden. Ein besonderer Vorteil liegt darin, dass die Aufzeichnung der jeweiligen ersten Empfangszeitwerte und zweiten Empfangszeitwerte für eine Mehrzahl von Slave-Netzwerkteilnehmern gemeinsam durch das erste Telegramm und das zweite Telegramm angestoßen werden kann. Dadurch lässt sich das Verfahren vorteilhafterweise besonders schnell und mit besonders geringem Aufwand durchführen.

In einer Ausführungsform des Verfahrens wird das zweite Telegramm zwischen 0,1 Sekunden und 10 Sekunden nach dem ersten Telegramm ausgesendet, bevorzugt zwischen 0,2 Sekunden und 5 Sekunden nach dem ersten Telegramm. Dadurch wird vorteilhafterweise sichergestellt, dass sich eine eventuelle Gangabweichung der lokalen Systemzeit des Slave-Netzwerkteilnehmers ausreichend stark auf die Zeitdifferenz zwischen dem ersten Empfangszeitwert und dem zweiten Empfangszeitwert auswirkt, um eine genaue Korrektur der Ganggeschwindigkeit der lokalen Systemzeit des Slave-Netzwerkteilnehmers zu ermöglichen. Gleichzeitig ist die zwischen dem Aussenden des ersten Telegramms und des zweiten Telegramms vergehende Zeit bei diesem Verfahren ausreichend kurz, um eine schnelle Initialisierung des Netzwerks zu ermöglichen.

In einer Ausführungsform des Verfahrens erfolgt das Auslesen des ersten Empfangszeitwerts durch Aussenden eines ersten Auslese-Telegramms durch den Master-Netzwerkteilnehmer. Das Auslesen des zweiten Empfangszeitwerts erfolgt durch Aussenden eines zweiten Auslese-Telegramms durch den Master-Netzwerkteilnehmer. Umfasst das Netzwerk mehrere an dem Verfahren beteiligte Slave-Netzwerkteilnehmer, so können die ersten Empfangszeitwerte mehrerer Slave-Netzwerkteilnehmer gemeinsam mit dem ersten Auslese-Telegramm ausgelesen werden, was vorteilhafterweise eine besonders schnelle Durchführung des Verfahrens ermöglicht. Dies gilt entsprechend für die zweiten Empfangszeitwerte der mehreren Slave-Netzwerkteilnehmer. Es ist aber auch möglich, die Empfangszeitwerte aller Slave-Netzwerkteilnehmer mit jeweils eigenen Auslese-Telegrammen auszulesen.

In einer Ausführungsform des Verfahrens erfolgt das Übertragen des Geschwindigkeitsparameters durch Aussenden eines Übertragungs-Telegramms durch den Master-Netzwerkteilnehmer. Umfasst das Netzwerk mehrere an dem Verfahren beteiligte Slave-Netzwerkteilnehmer, so können die Geschwindigkeitsparameter mehrerer Slave-Netzwerkteilnehmer gemeinsam mit nur einem Übertragungs-Telegramm ausgesendet werden, was vorteilhafterweise eine besonders schnelle Durchführung des Verfahrens ermöglicht. Es ist aber auch möglich, die Geschwindigkeitsparameter der mehreren Slave-Netzwerkteilnehmer mit jeweils eigenen Übertragungs-Telegrammen zu übertragen.

In einer Ausführungsform des Verfahrens wird dieses während einer Initialisierung des Netzwerks durchgeführt. Vorteilhafterweise kann dadurch bereits während der Initialisierung des Netzwerks sichergestellt werden, dass die Ganggeschwindigkeit der lokalen Systemzeit des Slave-Netzwerkteilnehmers sehr nahe an einem vorgegebenen Sollwert liegt.

In einer Ausführungsform des Verfahrens wird der Geschwindigkeitsparameter in einem nicht-flüchtigen Datenspeicher des Master-Netzwerkteilnehmers hinterlegt. Dies ermöglicht es, den Geschwindigkeitsparameter bei einer erneuten Initialisierung des Netzwerks ohne vorherige Messung an den Slave-Netzwerkteilnehmer zu übertragen. Dadurch wird eine noch schnellere Initialisierung des Netzwerks ermöglicht, wenn der Geschwindigkeitsparameter bereits bei einer vorhergehenden Initialisierung des Netzwerks ermittelt worden ist.

In einer Ausführungsform des Verfahrens ist das Netzwerk ein EtherCAT-Netzwerk. In diesem Fall können das erste Telegramm und das zweite Telegramm als EtherCAT-Telegramme ausgebildet sein.

Die Erfindung wird im Folgenden anhand von Figuren näher erläutert. Dabei zeigen:
- Figur 1: eine schematische Darstellung eines Netzwerks mit einem Master-Netzwerkteilnehmer und mehreren Slave-Netzwerkteilnehmern;
- Figur 2: eine schematische Darstellung eines Slave-Netzwerkteilnehmers des Netzwerks;
- Figur 3: eine schematische Darstellung mehrerer nacheinander ausgesendeter Telegramme;
- Figur 4: einen Zeitstrahl zur Illustration von Empfangszeitwerten und Referenzzeitwerten; und
- Figur 5: eine schematische Darstellung einer anderen Variante des Netzwerks.

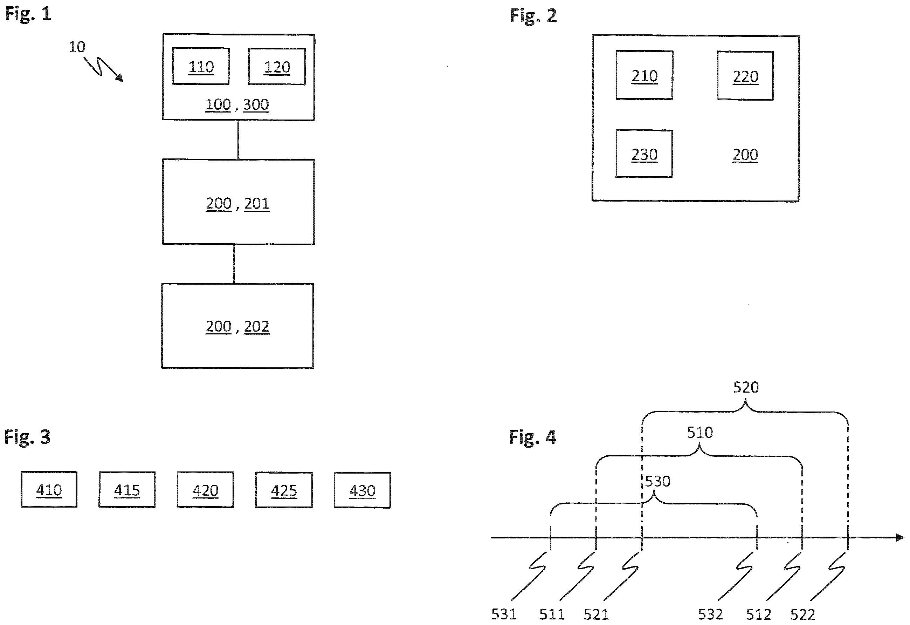

Figur 1 zeigt eine schematische Darstellung eines beispielhaften Netzwerks 10. Das Netzwerk 10 ist ein Ethernet-basiertes Netzwerk und kann beispielsweise für Steuerungs- und Automatisierungszwecke dienen. Das Netzwerk 10 kann auch als Feldbus bezeichnet werden. Das Netzwerk 10 kann beispielsweise ein EtherCAT-Netzwerk sein.

Das Netzwerk 10 weist einen Master-Netzwerkteilnehmer 100 und mehrere Slave-Netzwerkteilnehmer 200 auf. Im in Figur 1 gezeigten Beispiel sind ein erster Slave-Netzwerkteilnehmer 200, 201 und ein zweiter Slave-Netzwerkteilnehmer 200, 202 vorhanden. Das Netzwerk 10 kann aber auch eine andere Anzahl von Slave-Netzwerkteilnehmern 200 aufweisen, beispielsweise nur den ersten Slave-Netzwerkteilnehmer 200, 201 oder mehr als zwei Slave-Netzwerkteilnehmer 200.

Das in Figur 1 gezeigte Netzwerk 10 weist eine Linien-Topologie auf. Der Master-Netzwerkteilnehmer 100 ist mit dem ersten Slave-Netzwerkteilnehmer 200, 201 verbunden. Der erste Slave-Netzwerkteilnehmer 200, 201 ist mit dem zweiten Slave-Netzwerkteilnehmer 200, 202 verbunden. Das Netzwerk 10 könnte aber auch eine andere Topologie aufweisen. Beispielsweise könnte das Netzwerk 10 auch Verzweigungen aufweisen.

Der Master-Netzwerkteilnehmer 100 übt in dem Netzwerk 10 eine Leitungsfunktion aus. Beispielsweise sendet der Master-Netzwerkteilnehmer 100 Telegramme (Datentelegramme) aus, die in dem Netzwerk 10 zirkulieren. Solche Telegramme können beispielsweise alle Slave-Netzwerkteilnehmer 200 des Netzwerks 10 durchlaufen und anschließend zu dem Master-Netzwerkteilnehmer 100 zurückkehren.

Figur 2 zeigt eine schematische Darstellung eines beispielhaften Slave-Netzwerkteilnehmers 200. Alle Slave-Netzwerkteilnehmer 200 des Netzwerks 10 sind wie der Slave-Netzwerkteilnehmer 200 der Figur 2 ausgebildet, weisen also jeweils zumindest die in Figur 2 gezeigten Komponenten auf.

Jeder Slave-Netzwerkteilnehmer 200 weist jeweils eine lokale Systemzeit 210 auf. Die Iokale Systemzeit 210 kann beispielsweise ein Zahlenwert sein, der eine seit einem festgelegten Startzeitpunkt vergangene Zeitspanne angibt. Beispielsweise kann die lokale Systemzeit 210 die Anzahl der seit dem ersten Januar 2000, 00:00 Uhr vergangenen Nanosekunden angeben.

Jeder Slave-Netzwerkteilnehmer 200 inkrementiert seine lokale Systemzeit 210 selbständig auf Grundlage eines internen Taktgebers des jeweiligen Slave-Netzwerkteilnehmers 200. Dabei weist jeder Slave-Netzwerkteilnehmer 200 zumindest einen Geschwindigkeitsparameter 230 auf, der die Geschwindigkeit beeinflusst, mit der der jeweilige Slave-Netzwerkteilnehmer 200 seine lokale Systemzeit 210 inkrementiert. Der Geschwindigkeitsparameter 230 kann beispielsweise angeben, wie häufig die lokale Systemzeit 210 anstatt um einen Regelwert von beispielsweise 10 ns um einen abweichenden Wert von beispielsweise 9 ns oder 11 ns erhöht werden muss, damit sich im Mittel über einen längeren Zeitraum die gewünschte Erhöhungsgeschwindigkeit der lokalen Systemzeit 210 ergibt. Die Geschwindigkeit, mit der die lokale Systemzeit 210 wächst, kann auch als Ganggeschwindigkeit der lokalen Systemzeit 210 bezeichnet werden.

Zusätzlich weist jeder Slave-Netzwerkteilnehmer 200 ein Register 220 auf, in dem der Slave-Netzwerkteilnehmer 200 auf Anforderung einen gegenwärtigen Wert der lokalen Systemzeit 210 des Slave-Netzwerkteilnehmers 200 abspeichern kann.

Es ist erforderlich, dass die lokale Systemzeit 210 bei jedem Slave-Netzwerkteilnehmer 200 des Netzwerks 10 möglichst genau mit einer vorgegebenen Referenzzeit des Netzwerks 10 übereinstimmt und möglichst genau mit derselben Geschwindigkeit fortschreitet wie die Referenzzeit. Zu diesem Zweck führt der Master-Netzwerkteilnehmer 100 nach der Inbetriebnahme des Netzwerks 10 eine Initialisierung des Netzwerks 10 durch, während der die Absolutwerte und die Ganggeschwindigkeiten der lokalen Systemzeiten 210 der einzelnen Slave-Netzwerkteilnehmer 200 an die vorgegebene Referenzzeit des Netzwerks 10 angeglichen werden. Die Anpassung der Ganggeschwindigkeit der lokalen Systemzeit 210 jedes Slave-Netzwerkteilnehmers 200 erfolgt dabei durch das nachfolgend dargestellte Verfahren zur Zeitsynchronisation, bei dem der Master-Netzwerkteilnehmer 100 den Geschwindigkeitsparameter 230 für jeden an der Initialisierung beteiligten Slave-Netzwerkteilnehmer 200 des Netzwerks 10 ermittelt und an den jeweiligen Slave-Netzwerkteilnehmer 200 überträgt. Auch nach der Initialisierung des Netzwerks 10 können die Geschwindigkeitsparameter 230 der einzelnen Slave-Netzwerkteilnehmer 200 im Regelbetrieb des Netzwerks 10 noch periodisch nachjustiert werden.

Bei dem in Figur 1 gezeigten Netzwerk 10 fungiert der Master-Netzwerkteilnehmer 100 als Referenzzeitgeber 300 des Netzwerks 10. Der Master-Netzwerkteilnehmer 100 weist hierfür eine Systemzeit 110 auf, die die Referenzzeit des Netzwerks 10 darstellt.

Zur Zeitsynchronisation sendet der Master-Netzwerkteilnehmer 100 ein in Figur 3 schematisch gezeigtes erstes Telegramm 410 aus. Der Master-Netzwerkteilnehmer 100 sendet das erste Telegramm 410 zu einem Zeitpunkt aus, zu dem die Systemzeit 110 einen ersten Referenzzeitwert 531 aufweist. Der erste Referenzzeitwert 531 ist in Figur 4 schematisch auf einem Zeitstrahl dargestellt. Der erste Referenzzeitwert 531 wird in dem Master-Netzwerkteilnehmer 100 abgespeichert.

Der erste Slave-Netzwerkteilnehmer 200, 201 empfängt das erste Telegramm 410 zu einem Zeitpunkt, zu dem die lokale Systemzeit 210 des ersten Slave-Netzwerkteilnehmers 200, 201 einen ersten Empfangszeitwert 511 aufweist. Der Zeitstrahl der Figur 4 verdeutlicht, dass der Zeitpunkt, zu dem die lokale Systemzeit 210 des ersten Slave-Netzwerkteilnehmers 200, 201 den ersten Empfangszeitwert 511 aufweist, nach dem Zeitpunkt liegt, zu dem die Systemzeit 110 des Master-Netzwerkteilnehmers 100 den ersten Referenzzeitwert 531 aufweist. Der erste Slave-Netzwerkteilnehmer 200, 201 speichert den ersten Empfangszeitwert 511 des ersten Slave-Netzwerkteilnehmers 200, 201 in seinem Register 220 ab.

Der zweite Slave-Netzwerkteilnehmer 200, 202 empfängt das erste Telegramm 410 zu einem nachfolgenden Zeitpunkt, zu dem die lokale Systemzeit 210 des zweiten Slave-Netzwerkteilnehmers 200, 202 einen ersten Empfangszeitwert 521 aufweist. Auch der erste Empfangszeitwert 521 des zweiten Slave-Netzwerkteilnehmers 200, 202 ist schematisch in Figur 4 gezeigt. Der zweite Slave-Netzwerkteilnehmer 200, 202 speichert diesen ersten Empfangszeitwert 521 des zweiten Slave-Netzwerkteilnehmers 200, 202 in seinem Register 220 ab.

Würde das Netzwerk 10 noch weitere Slave-Netzwerkteilnehmer 200 umfassen, so würden auch diese das erste Telegramm 410 jeweils zu einem Zeitpunkt empfangen, zu dem die lokale Systemzeit 210 des jeweiligen Slave-Netzwerkteilnehmers 200 einen jeweiligen ersten Empfangszeitwert aufweist. Die jeweiligen Slave-Netzwerkteilnehmer 200 würden diesen jeweiligen ersten Empfangszeitwert in ihrem jeweiligen Register 220 abspeichern.

Nachdem das erste Telegramm 410 alle an dem Zeitsynchronisationsverfahren beteiligten Slave-Netzwerkteilnehmer 200 des Netzwerks 10 durchlaufen hat, liest der Master-Netzwerkteilnehmer 100 die in den Registern 220 der Slave-Netzwerkteilnehmer 200 abgespeicherten ersten Empfangszeitwerte 511, 521 aus. Dies kann beispielsweise erfolgen, indem der Master-Netzwerkteilnehmer 100 ein in Figur 3 schematisch dargestelltes erstes Auslese-Telegramm 415 aussendet. Alle an dem Zeitsynchronisationsverfahren beteiligten Slave-Netzwerkteilnehmer 200 des Netzwerks 10 fügen jeweils den in ihrem Register 220 abgespeicherten ersten Empfangszeitwert 511, 521 in das erste Auslese-Telegramm 415 ein. Nach der Rückkehr des ersten Auslese-Telegramms 415 zu dem Master-Netzwerkteilnehmer 100 liest der Master-Netzwerkteilnehmer 100 die ersten Empfangszeitwerte 511, 521 aus dem ersten Auslese-Telegramm 415 aus und speichert diese ab.

Alternativ wäre es möglich, die ersten Empfangszeitwerte 511, 521 der einzelnen Slave-Netzwerkteilnehmer 200 mit jeweils einzelnen ersten Auslese-Telegrammen 415 auszulesen. In diesem Fall sendet der Master-Netzwerkteilnehmer 100 für jeden Slave-Netzwerkteilnehmer 200 jeweils ein eigenes erstes Auslese-Telegramm 415 aus.

Zu einem späteren Zeitpunkt, zu dem die Systemzeit 110 des Master-Netzwerkteilnehmers 100 einen zweiten Referenzzeitwert 532 aufweist, sendet der Master-Netzwerkteilnehmer 100 ein in Figur 3 schematisch dargestelltes zweites Telegramm 420 aus. Das Aussenden des zweiten Telegramms 420 kann beispielsweise zwischen 0,1 Sekunden und 10 Sekunden nach dem Aussenden des ersten Telegramms 410 erfolgen, insbesondere beispielsweise zwischen 0,2 Sekunden und 5 Sekunden nach dem Aussenden des ersten Telegramms 410. Zweckmäßig ist, das zweite Telegramm 420 etwa 1 Sekunde nach dem Aussenden des ersten Telegramms 410 auszusenden. Der zweite Referenzzeitwert 532 ist schematisch in Figur 4 gezeigt.

Der erste Slave-Netzwerkteilnehmer 200, 201 empfängt das zweite Telegramm 420 zu einem Zeitpunkt, zu dem die lokale Systemzeit 210 des ersten Slave-Netzwerkteilnehmers 200, 201 einen zweiten Empfangszeitwert 512 aufweist. Der erste Slave-Netzwerkteilnehmer 200, 201 speichert den zweiten Empfangszeitwert 512 in seinem Register 220 ab.

Der zweite Slave-Netzwerkteilnehmer 200, 202 empfängt das zweite Telegramm 420 zu einem nachfolgenden Zeitpunkt, zu dem die lokale Systemzeit 210 des zweiten Slave-Netzwerkteilnehmers 200, 202 einen zweiten Empfangszeitwert 522 aufweist. Der zweite Slave-Netzwerkteilnehmer 200, 202 speichert den zweiten Empfangszeitwert 522 in seinem Register 220 ab.

Der zweite Empfangszeitwert 512 des ersten Slave-Netzwerkteilnehmers 200, 201 und der zweite Empfangszeitwert 522 des zweiten Slave-Netzwerkteilnehmers 200, 202 sind schematisch in Figur 4 gezeigt.

Gegebenenfalls vorhandene weitere Slave-Netzwerkteilnehmer 200 empfangen das zweite Telegramm 420 jeweils zu einem Zeitpunkt, zu dem die lokale Systemzeit 210 des jeweiligen Slave-Netzwerkteilnehmers 200 einen zweiten Empfangszeitwert aufweist. Die weiteren Slave-Netzwerkteilnehmer 200 speichern den jeweiligen zweiten Empfangszeitwert in ihrem jeweiligen Register 220 ab.

Anschließend liest der Master-Netzwerkteilnehmer 100 die in den Registern 220 der Slave-Netzwerkteilnehmer 200 abgespeicherten zweiten Empfangszeitwerte 512, 522 aus. Dies kann beispielsweise analog zum Auslesen der ersten Empfangszeitwerte 511, 521 durch Aussenden eines in Figur 3 schematisch gezeigten zweiten Auslese-Telegramms 425 erfolgen.

Eine alternative Möglichkeit besteht darin, die ersten Empfangszeitwerte 511, 521 und die zweiten Empfangszeitwerte 512, 522 der einzelnen Slave-Netzwerkteilnehmer 200 gemeinsam auszulesen. Dies erfordert es, dass die Slave-Netzwerkteilnehmer 200 die jeweiligen ersten Empfangszeitwerte 511, 521 und die jeweiligen zweiten Empfangszeitwerte 512, 522 in getrennten Registern abspeichern. Dann können die ersten Empfangszeitwerte 511, 521 und die zweiten Empfangszeitwerte 512, 522 der einzelnen Slave-Netzwerkteilnehmer 200 gemeinsam durch das zweite Auslese-Telegramms 425 ausgelesen werden. Das Aussenden des ersten Auslese-Telegramms 415 kann in diesem Fall entfallen.

Eine weitere alternative Möglichkeit besteht darin, dass die Slave-Netzwerkteilnehmer 200 die ersten Empfangszeitwerte 511, 521 direkt in dem ersten Telegramm 410 und die zweiten Empfangszeitwerte 512, 522 direkt in dem zweiten Telegramm 420 hinterlegen. In diesem Fall liest der Master-Netzwerkteilnehmer 100 die ersten Empfangszeitwerte 511, 521 direkt mit dem ersten Telegramm 410 und die zweiten Empfangszeitwerte 512, 522 direkt mit dem zweiten Telegramm 420 aus. Das Aussenden des ersten Auslese-Telegrammen 415 und des zweiten Auslese-Telegramms 425 kann dann entfallen. Ebenso ist es dann nicht erforderlich, dass die Slave-Netzwerkteilnehmer 200 ihre jeweiligen ersten Empfangszeitwerte 511, 521 in ihrem jeweiligen Register 220 abspeichern und ihre jeweiligen zweiten Empfangszeitwerte 512, 522 in ihrem jeweiligen Register 220 abspeichern.

Anschließend liegen in dem Master-Netzwerkteilnehmer 100 der erste Referenzzeitwert 531 und der zweite Referenzzeitwert 532, der erste Empfangszeitwert 511 und der zweite Empfangszeitwert 512 des ersten Slave-Netzwerkteilnehmers 200, 201, der erste Empfangszeitwert 521 und der zweite Empfangszeitwert 522 des zweiten Slave-Netzwerkteilnehmers 200, 202 sowie gegebenenfalls die ersten und zweiten Empfangszeitwerte weiterer Slave-Netzwerkteilnehmer 200 vor. Hieraus kann der Master-Netzwerkteilnehmer 100 für jeden Slave-Netzwerkteilnehmer 200 den Geschwindigkeitsparameter 230 so berechnen, dass die lokale Systemzeit 210 des jeweiligen Slave-Netzwerkteilnehmers 200 mit größtmöglicher Genauigkeit genauso schnell abläuft wie die die Referenzzeit des Netzwerks 10 bildende Systemzeit 110 des Master-Netzwerkteilnehmers 100.

Die Berechnung des Geschwindigkeitsparameters 230 beruht jeweils auf der Einsicht, dass beispielsweise bei dem ersten Slave-Netzwerkteilnehmer 200, 201 zwischen dem ersten Empfangszeitwert 511 und dem zweiten Empfangszeitwert 512 dieselbe Zeitdifferenz läge wie zwischen dem ersten Referenzzeitwert 531 und dem zweiten Referenzzeitwert 532, wenn die lokale Systemzeit 210 des ersten Slave-Netzwerkteilnehmers 200, 201 bereits mit derselben Geschwindigkeit abliefe wie die Systemzeit 110 des Master-Netzwerkteilnehmers 100.

Zur Berechnung des Geschwindigkeitsparameters 230 für jeden Slave-Netzwerkteilnehmer 200 kann der Master-Netzwerkteilnehmer 100 daher beispielsweise eine Referenzzeitdifferenz 530 als Differenz zwischen dem ersten Referenzzeitwert 531 und dem zweiten Referenzzeitwert 532 berechnen, indem also der erste Referenzzeitwert 531 von dem zweiten Referenzzeitwert 532 subtrahiert wird. Ferner kann der Master-Netzwerkteilnehmer 100 für den ersten Slave-Netzwerkteilnehmer 200, 201 eine Empfangszeitdifferenz 510 als Differenz zwischen dem ersten Empfangszeitwert 511 des ersten Slave-Netzwerkteilnehmers 200, 201 und dem zweiten Empfangszeitwert 512 des ersten Slave-Netzwerkteilnehmers 200, 201 berechnen. Entsprechend kann der Master-Netzwerkteilnehmer 100 für den zweiten Slave-Netzwerkteilnehmer 200, 202 eine Empfangszeitdifferenz 520 als Differenz zwischen dem ersten Empfangszeitwert 521 des zweiten Slave-Netzwerkteilnehmers 200, 202 und dem zweiten Empfangszeitwert 522 des zweiten Slave-Netzwerkteilnehmers 200, 202 berechnen. Ebenso kann der Master-Netzwerkteilnehmer 100 weitere Empfangszeitdifferenzen für weitere Slave-Netzwerkteilnehmer 200 des Netzwerks 10 berechnen. Die Referenzzeitdifferenz 530, die Empfangszeitdifferenz 510 des ersten Slave-Netzwerkteilnehmers 200, 201 und die Empfangszeitdifferenz 520 des zweiten Slave-Netzwerkteilnehmers 200, 202 sind in Figur 4 dargestellt.

Ist die Empfangszeitdifferenz 510 des ersten Slave-Netzwerkteilnehmers 200, 201 größer als die Referenzzeitdifferenz 530, so läuft die lokale Systemzeit 210 des ersten Slave-Netzwerkteilnehmers 200, 201 schneller ab als die Systemzeit 110 des Master-Netzwerkteilnehmers 100 und muss durch Anpassung des Geschwindigkeitsparameters 230 des ersten Slave-Netzwerkteilnehmers 200, 201 verlangsamt werden. Ist die Empfangszeitdifferenz 510 des ersten Slave-Netzwerkteilnehmers 200, 201 dagegen kleiner als die Referenzzeitdifferenz 530, so läuft die lokale Systemzeit 210 des ersten Slave-Netzwerkteilnehmers 200, 201 langsamer ab als die Systemzeit 110 des Master-Netzwerkteilnehmers 100 und muss beschleunigt werden. Die Größe der Abweichung zwischen der Empfangszeitdifferenz 510 und der Referenzzeitdifferenz 530 ist dabei proportional zur Abweichung zwischen den Geschwindigkeiten der lokalen Systemzeit 210 des ersten Slave-Netzwerkteilnehmers 200, 201 und der Systemzeit 110 des Master-Netzwerkteilnehmers 100. Hieraus lässt sich der Geschwindigkeitsparameter 230 für den ersten Slave-Netzwerkteilnehmer 200, 201 berechnen. Entsprechend kann der Geschwindigkeitsparameter 230 auch für die übrigen Slave-Netzwerkteilnehmer 200 berechnet werden.

Nach dem Berechnen des Geschwindigkeitsparameters 230 für jeden an dem Synchronisationsverfahren beteiligten Slave-Netzwerkteilnehmern 200 des Netzwerks 10 überträgt der Master-Netzwerkteilnehmer 100 den jeweiligen Geschwindigkeitsparameter 230 an jeden beteiligten Slave-Netzwerkteilnehmer 200 des Netzwerks 10. Der für den ersten Slave-Netzwerkteilnehmer 200, 201 berechnete Geschwindigkeitsparameter 230 wird also an den ersten Slave-Netzwerkteilnehmer 200, 201 übertragen. Der für den zweiten Slave-Netzwerkteilnehmer 200, 202 berechnete Geschwindigkeitsparameter 230 wird an den zweiten Slave-Netzwerkteilnehmer 200, 202 übertragen.

Das Übertragen des Geschwindigkeitsparameters 230 kann jeweils durch Aussenden eines in Figur 3 schematisch dargestellten Übertragungs-Telegramms 430 erfolgen. Dabei wird der jeweilige Geschwindigkeitsparameter 230 mittels des Übertragungs-Telegramms 430 an den jeweiligen Slave-Netzwerkteilnehmer 200 übertragen. Es ist möglich, mit nur einem Übertragungs-Telegramm 430 die jeweiligen Geschwindigkeitsparameter 230 für mehrere an dem Zeitsynchronisationsverfahren beteiligte Slave-Netzwerkteilnehmer 200 gleichzeitig zu übertragen. Es ist aber auch möglich, den Geschwindigkeitsparameter 230 für jeden Slave-Netzwerkteilnehmer 200 mit einem jeweils eigenen Übertragungs-Telegramm 430 zu übertragen.

Der Master-Netzwerkteilnehmer 100 kann die berechneten Geschwindigkeitsparameter 230 aller an dem Zeitsynchronisationsverfahren beteiligten Slave-Netzwerkteilnehmer 200 des Netzwerks 10 in einem nicht-flüchtigen Datenspeicher 120 des Master-Netzwerkteilnehmers 100 und/oder in den jeweiligen Slave-Netzwerkteilnehmern 200 hinterlegen. Dies ermöglicht es, dass der Master-Netzwerkteilnehmer 100 nach einer erneuten Inbetriebnahme des Netzwerks 10 die in dem nicht-flüchtigen Datenspeicher 120 hinterlegten Geschwindigkeitsparameter 230 der Slave-Netzwerkteilnehmer 200 ausliest und unmittelbar an die Slave-Netzwerkteilnehmer 200 überträgt. In diesem Fall kann auf die vorstehend beschriebenen Verfahrensschritte zum Aussenden des ersten Telegramms 410, zum Auslesen der ersten Empfangszeitwerte 511, 521, zum Aussenden des zweiten Telegramms 420, zum Auslesen der zweiten Empfangszeitwerte 512, 522 und zum Berechnen des Geschwindigkeitsparameters 230 für jeden Slave-Netzwerkteilnehmer 200 verzichtet werden. Dadurch kann die Initialisierung des Netzwerks 10 bei der erneuten Inbetriebnahme des Netzwerks 10 beschleunigt werden. Das Hinterlegen der berechneten Geschwindigkeitsparameter 230 in dem nicht-flüchtigen Datenspeicher 120 des Master-Netzwerkteilnehmers 100 kann aber auch entfallen.

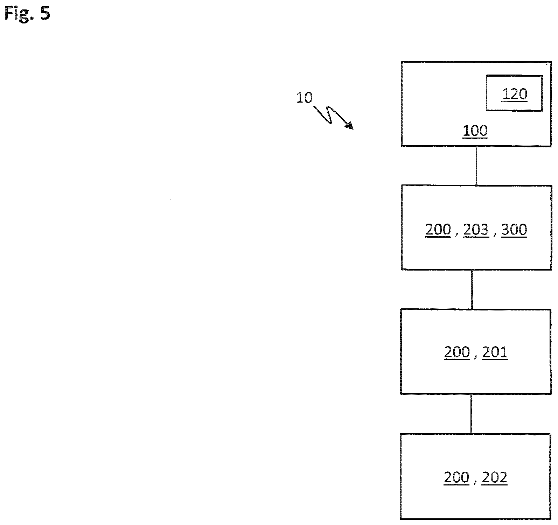

Figur 5 zeigt eine schematische Darstellung einer alternativen Ausgestaltung des Netzwerks 10. Bei der in Figur 5 gezeigten Variante des Netzwerks 10 fungiert nicht der Master-Netzwerkteilnehmer 100 als Referenzzeitgeber 300. Stattdessen ist im Vergleich zu der in Figur 1 gezeigten Variante des Netzwerks 10 ein zusätzlicher Slave-Netzwerkteilnehmer 200, 203 vorhanden, der als Referenzzeitgeber 300 fungiert. Der zusätzliche Slave-Netzwerkteilnehmer 200, 203 ist im Vergleich zu der in Figur 1 gezeigten Variante des Netzwerks 10 zwischen dem Master-Netzwerkteilnehmer 100 und dem ersten Slave-Netzwerkteilnehmer 200, 201 eingefügt worden. Dadurch bildet der zusätzliche Slave-Netzwerkteilnehmer 200, 203 in der Linientopologie des Netzwerks 10 den ersten dem Master-Netzwerkteilnehmer 100 nachfolgenden Slave-Netzwerkteilnehmer 200. Der zusätzliche Slave-Netzwerkteilnehmer 200, 203 könnte allerdings auch an beliebiger anderer Stelle in das Netzwerk 10 eingefügt werden. Der zusätzliche Slave-Netzwerkteilnehmer 200, 203 ist ausgebildet wie die übrigen Slave-Netzwerkteilnehmer 200 des Netzwerks 10.

Der zusätzliche Slave-Netzwerkteilnehmer 200, 203 fungiert als Referenzzeitgeber 300 des Netzwerks 10, was bedeutet, dass die lokale Systemzeit 210 des zusätzlichen Slave-Netzwerkteilnehmers 200, 203 die Referenzzeit des Netzwerks 10 darstellt. Die jeweilige lokale Systemzeit 210 jedes weiteren Slave-Netzwerkteilnehmers 200 des Netzwerks 10 soll mit der lokalen Systemzeit 210 des als Referenzzeitgeber 300 fungierenden zusätzlichen Slave-Netzwerkteilnehmers 200, 203 synchronisiert werden. Da die lokale Systemzeit 210 des zusätzlichen Slave-Netzwerkteilnehmers 200, 203 selbst die Referenzzeit des Netzwerks 10 darstellt, muss die lokale Systemzeit 210 des zusätzlichen Slave-Netzwerkteilnehmers 200, 203 nicht mit der Referenzzeit synchronisiert werden. Eine Anpassung des Geschwindigkeitsparameters 230 des zusätzlichen Slave-Netzwerkteilnehmers 200, 203 ist daher nicht erforderlich.

Die jeweiligen Geschwindigkeitsparameter 230 der übrigen Slave-Netzwerkteilnehmer 200 des Netzwerks 10 werden während der Initialisierung des Netzwerks 10 durch das oben bereits beschriebene Zeitsynchronisationsverfahren ermittelt. Da allerdings bei der in Figur 5 gezeigten Variante des Netzwerks 10 der zusätzliche Slave-Netzwerkteilnehmer 200, 203 als Referenzzeitgeber 300 fungiert, müssen der erste Referenzzeitwert 531 und der zweite Referenzzeitwert 532 bei der in Figur 5 gezeigten Variante des Netzwerks 10 etwas anders ermittelt werden als vorstehend beschrieben. Nachfolgend wird beschrieben, wodurch sich das Verfahren zur Zeitsynchronisation bei seiner Anwendung in der in Figur 5 gezeigten Variante des Netzwerks 10 von der vorstehend beschriebenen Anwendung in der in Figur 1 gezeigten Variante des Netzwerks 10 unterscheidet.

Bei der in Figur 5 gezeigten Variante des Netzwerks 10 sendet der Master-Netzwerkteilnehmer 100 zunächst das erste Telegramm 410 aus. Der als Referenzzeitgeber 300 fungierende zusätzliche Slave-Netzwerkteilnehmer 200, 203 empfängt das erste Telegramm 410 zu einem Zeitpunkt, zu dem die als Referenzzeit fungierende lokale Systemzeit 210 des zusätzlichen Slave-Netzwerkteilnehmers 200, 203 einen ersten Referenzzeitwert 531 aufweist. Dieser erste Referenzzeitwert 531 wird durch den als Referenzzeitgeber 300 fungierenden zusätzlichen Slave-Netzwerkteilnehmer 200, 203 in seinem Register 220 abgespeichert.

Nachfolgend empfangen der erste Slave-Netzwerkteilnehmer 200, 201, der zweite Slave-Netzwerkteilnehmer 200, 202 und alle eventuellen weiteren an dem Zeitsynchronisationsverfahren beteiligten Slave-Netzwerkteilnehmer 200 des Netzwerks 10 das erste Telegramm 410 und speichern die jeweiligen ersten Empfangszeitwerte 511, 521 auf die oben beschriebene Weise in ihrem jeweiligen Register 220 ab.

Anschließend wird der in dem Referenzzeitgeber 300 abgespeicherte erste Referenzzeitwert 531 ebenso durch den Master-Netzwerkteilnehmer 100 ausgelesen wie die in den übrigen Slave-Netzwerkteilnehmern 200 abgespeicherten ersten Empfangszeitwerte 511, 521. Dies kann beispielsweise mittels des ersten Auslese-Telegramms 415 erfolgen.

Später sendet der Master-Netzwerkteilnehmer 100 das zweite Telegramm 420 aus. Der als Referenzzeitgeber 300 fungierende zusätzliche Slave-Netzwerkteilnehmer 200, 203 empfängt das zweite Telegramm 420 zu einem Zeitpunkt, zu dem die die Referenzzeit des Netzwerks 10 bildende lokale Systemzeit 210 des zusätzlichen Slave-Netzwerkteilnehmers 200, 203 einen zweiten Referenzzeitwert 532 aufweist. Der als Referenzzeitgeber 300 fungierende zusätzliche Slave-Netzwerkteilnehmer 200, 203 speichert den zweiten Referenzzeitwert 532 in seinem Register 220 ab.

Nachfolgend empfangen der erste Slave-Netzwerkteilnehmer 200, 201, der zweite Slave-Netzwerkteilnehmer 200, 202 und alle eventuellen weiteren an dem Zeitsynchronisationsverfahren beteiligten Slave-Netzwerkteilnehmer 200 des Netzwerks 10 das zweite Telegramm 420 und speichern jeweils die zweiten Empfangszeitwerte 512, 522 in ihrem jeweiligen Register 220 ab, wie dies oben beschrieben worden ist.

Anschließend liest der Master-Netzwerkteilnehmer 100 den in dem Referenzzeitgeber 300 abgespeicherten zweiten Referenzzeitwert 532 genau so aus, wie auch die in den übrigen Slave-Netzwerkteilnehmern 200 abgespeicherten zweiten Empfangszeitwerte 512, 522 ausgelesen werden. Dies kann beispielsweise mittels des zweiten Auslese-Telegramms 425 erfolgen.

Dadurch sind dem Master-Netzwerkteilnehmer 100 nun auch bei der in Figur 5 gezeigten Variante des Netzwerks 10 der erste Referenzzeitwert 531 und der zweite Referenzzeitwert 532 bekannt. Außerdem sind dem Master-Netzwerkteilnehmer 100 wieder der erste Empfangszeitwert 511 des ersten Slave-Netzwerkteilnehmers 200, 201, der zweite Empfangszeitwert 512 des ersten Slave-Netzwerkteilnehmers 200, 201, der erste Empfangszeitwert 521 des zweiten Slave-Netzwerkteilnehmers 200, 202, der zweite Empfangszeitwert 522 des zweiten Slave-Netzwerkteilnehmers 200, 202 und die ersten und zweiten Empfangszeitwerte aller weiteren an dem Zeitsynchronisationsverfahren beteiligten Slave-Netzwerkteilnehmer 200 des Netzwerks 10 bekannt. Hieraus kann der Master-Netzwerkteilnehmer 100 auf die vorstehend beschriebene Weise für jeden an dem Zeitsynchronisationsverfahren beteiligten Slave-Netzwerkteilnehmer 200 den jeweiligen Geschwindigkeitsparameter 230 berechnen und diesen anschließend an den jeweiligen Slave-Netzwerkteilnehmer 200 übertragen.

Die berechneten Geschwindigkeitsparameter 230 können wahlweise wiederum in dem nicht-flüchtigen Datenspeicher 120 des Master-Netzwerkteilnehmers 100 abgespeichert werden, um sie bei einer nachfolgenden erneuten Inbetriebnahme des Netzwerks 10 auszulesen und an die Slave-Netzwerkteilnehmer 200 zu übertragen.

Bei der in Figur 5 gezeigten Variante des Netzwerks 10 kann auch der Master-Netzwerkteilnehmer 100 an dem Synchronisationsverfahren teilnehmen und seine Systemzeit mit dem Referenzzeitgeber synchronisieren. Hierzu muss er seine Aussendezeitwerte des ersten Telegrams 410 und des zweiten Telegrams 420 speichern. Die Berechnung des Geschwindigkeitsparameters für den Master-Netzwerkteilnehmer 100 erfolgt dann wie vorstehend beschrieben, wobei anstatt der vorgenannten Empfangszeitwerte die Aussendezeitwerte verwendet werden.

### Bezugszeichenliste

- 10: Netzwerk

- 100: Master-Netzwerkteilnehmer
- 110: Systemzeit
- 120: nicht-flüchtiger Datenspeicher

- 200: Slave-Netzwerkteilnehmer
- 210: lokale Systemzeit
- 220: Register
- 230: Geschwindigkeitsparameter

- 201: erster Slave-Netzwerkteilnehmer
- 202: zweiter Slave-Netzwerkteilnehmer
- 203: zusätzlicher Slave-Netzwerkteilnehmer

- 300: Referenzzeitgeber

- 410: erstes Telegramm
- 415: erstes Auslese-Telegramm
- 420: zweites Telegramm
- 425: zweites Auslese-Telegramm
- 430: Übertragungs-Telegramm

- 510: Empfangszeitdifferenz des ersten Slave-Netzwerkteilnehmers
- 511: erster Empfangszeitwert des ersten Slave-Netzwerkteilnehmers
- 512: zweiter Empfangszeitwert des ersten Slave-Netzwerkteilnehmers

- 520: Empfangszeitdifferenz des zweiten Slave-Netzwerkteilnehmers
- 521: erster Empfangszeitwert des zweiten Slave-Netzwerkteilnehmers
- 522: zweiter Empfangszeitwert des zweiten Slave-Netzwerkteilnehmers

- 530: Referenzzeitdifferenz
- 531: erster Referenzzeitwert
- 532: zweiter Referenzzeitwert

## Patentansprüche

1. Verfahren zur Zeitsynchronisation in einem Ethernet-basierten Netzwerk (10), wobei das Netzwerk (10) zumindest einen Master-Netzwerkteilnehmer (100), einen Slave-Netzwerkteilnehmer (200, 201) und einen weiteren Slave-Netzwerkteilnehmer (200, 202) aufweist,
wobei das Verfahren die folgenden Schritte umfasst:
- Aussenden eines ersten Telegramms (410) durch den Master-Netzwerkteilnehmer (100),
wobei der Slave-Netzwerkteilnehmer (200, 201) das erste Telegramm (410) zu einem ersten Empfangszeitwert (511) einer lokalen Systemzeit (210) des Slave-Netzwerkteilnehmers (200, 201) empfängt und den ersten Empfangszeitwert (511) abspeichert,
wobei der weitere Slave-Netzwerkteilnehmer (200, 202) das erste Telegramm (410) zu einem weiteren ersten Empfangszeitwert (521) einer lokalen Systemzeit (210) des weiteren Slave-Netzwerkteilnehmers (200, 202) empfängt und den weiteren ersten Empfangszeitwert (521) abspeichert;
- Auslesen des ersten Empfangszeitwerts (511) und des weiteren ersten Empfangszeitwerts (521) durch den Master-Netzwerkteilnehmer (100);
- Aussenden eines zweiten Telegramms (420) durch den Master-Netzwerkteilnehmer (100),
wobei der Slave-Netzwerkteilnehmer (200, 201) das zweite Telegramm (420) zu einem zweiten Empfangszeitwert (512) der lokalen Systemzeit (210) des Slave-Netzwerkteilnehmers (200, 201) empfängt und den zweiten Empfangszeitwert (512) abspeichert,
wobei der weitere Slave-Netzwerkteilnehmer (200, 202) das zweite Telegramm (420) zu einem weiteren zweiten Empfangszeitwert (522) der lokalen Systemzeit (210) des weiteren Slave-Netzwerkteilnehmers (200, 202) empfängt und den weiteren zweiten Empfangszeitwert (522) abspeichert;
- Auslesen des zweiten Empfangszeitwerts (512) und des weiteren zweiten Empfangszeitwerts (522) durch den Master-Netzwerkteilnehmer (100);
- Berechnen eines Geschwindigkeitsparameters (230) der lokalen Systemzeit (210) des Slave-Netzwerkteilnehmers (200, 201) unter Verwendung des ersten Empfangszeitwerts (511) und des zweiten Empfangszeitwerts (512) durch den Master-Netzwerkteilnehmer (100),
wobei der Master-Netzwerkteilnehmer (100) einen weiteren Geschwindigkeitsparameter (230) der lokalen Systemzeit (210) des weiteren Slave-Netzwerkteilnehmers (200, 202) aus den weiteren Empfangszeitwerten (521, 522) berechnet;
- Übertragen des Geschwindigkeitsparameters (230) an den Slave-Netzwerkteilnehmer (200, 201) und des weiteren Geschwindigkeitsparameters (230) an den weiteren Slave-Netzwerkteilnehmer (200, 202).

2. Verfahren gemäß Anspruch 1,
wobei das Netzwerk (10) einen Referenzzeitgeber (300) aufweist,
wobei der Referenzzeitgeber (300) das erste Telegramm (410) zu einem ersten Referenzzeitwert (531) einer lokalen Systemzeit (210) des Referenzzeitgebers (300) empfängt und den ersten Referenzzeitwert (531) abspeichert,
wobei der erste Referenzzeitwert (531) durch den Master-Netzwerkteilnehmer (100) ausgelesen wird,
wobei der Referenzzeitgeber (300) das zweite Telegramm (420) zu einem zweiten Referenzzeitwert (532) der lokalen Systemzeit (210) des Referenzzeitgebers (300) empfängt und den zweiten Referenzzeitwert (532) abspeichert,
wobei der zweite Referenzzeitwert (532) durch den Master-Netzwerkteilnehmer (100) ausgelesen wird,
wobei der Geschwindigkeitsparameter (230) aus den Empfangszeitwerten (511, 512) und den Referenzzeitwerten (531, 532) berechnet wird.

3. Verfahren gemäß Anspruch 1,
wobei der Master-Netzwerkteilnehmer (100) das erste Telegramm (410) zu einem ersten Referenzzeitwert (531) einer Systemzeit (110) des Master-Netzwerkteilnehmers (100) aussendet,
wobei der Master-Netzwerkteilnehmer (100) das zweite Telegramm (420) zu einem zweiten Referenzzeitwert (532) der Systemzeit (110) des Master-Netzwerkteilnehmers (100) aussendet,
wobei der Geschwindigkeitsparameter (230) aus den Empfangszeitwerten (511, 512) und den Referenzzeitwerten (531, 532) berechnet wird.

4. Verfahren gemäß einem der vorhergehenden Ansprüche,
wobei der Master-Netzwerkteilnehmer (100) eine Referenzzeitdifferenz (530) als Differenz zwischen dem ersten Referenzzeitwert (531) und dem zweiten Referenzzeitwert (532) berechnet und eine Empfangszeitdifferenz (510) als Differenz zwischen dem ersten Empfangszeitwert (511) und dem zweiten Empfangszeitwert (512) berechnet,
wobei der Master-Netzwerkteilnehmer (100) den Geschwindigkeitsparameter (230) aus der Referenzzeitdifferenz (530) und der Empfangszeitdifferenz (510) berechnet.

5. Verfahren gemäß einem der vorhergehenden Ansprüche,
wobei das zweite Telegramm (420) zwischen 0,1 Sekunden und 10 Sekunden nach dem ersten Telegramm (410) ausgesendet wird, bevorzugt zwischen 0,2 Sekunden und 5 Sekunden nach dem ersten Telegramm (410).

6. Verfahren gemäß einem der vorhergehenden Ansprüche,
wobei das Auslesen des ersten Empfangszeitwerts (511) durch Aussenden eines ersten Auslese-Telegramms (415) durch den Master-Netzwerkteilnehmer (100) erfolgt,
wobei das Auslesen des zweiten Empfangszeitwerts (512) durch Aussenden eines zweiten Auslese-Telegramms (425) durch den Master-Netzwerkteilnehmer (100) erfolgt.

7. Verfahren gemäß einem der vorhergehenden Ansprüche,
wobei das Übertragen des Geschwindigkeitsparameters (230) durch Aussenden eines Übertragungs-Telegramms (430) durch den Master-Netzwerkteilnehmer (100) erfolgt.

8. Verfahren gemäß einem der vorhergehenden Ansprüche,
wobei das Verfahren während einer Initialisierung des Netzwerks (10) durchgeführt wird.

9. Verfahren gemäß einem der vorhergehenden Ansprüche,
wobei der Geschwindigkeitsparameter (230) in einem nicht-flüchtigen Datenspeicher (120) des Master-Netzwerkteilnehmers (100) hinterlegt wird.

10. Verfahren gemäß einem der vorhergehenden Ansprüche,
wobei das Netzwerk (10) ein EtherCAT-Netzwerk ist.

## Claims

1. Method for time synchronization in an Ethernet-based network (10), wherein the network (10) contains at least a master network subscriber (100), a slave network subscriber (200, 201) and a further slave network subscriber (200, 202),
wherein the method comprises the following steps:
- the master network subscriber (100) sending a first telegram (410),
wherein the slave network subscriber (200, 201) receives the first telegram (410) at a first reception time value (511) of a local system time (210) of the slave network subscriber (200, 201) and stores the first reception time value (511),
wherein the further slave network subscriber (200, 202) receives the first telegram (410) at a further first reception time value (521) of a local system time (210) of the further slave network subscriber (200, 202) and stores the further first reception time value (521);
- the master network subscriber (100) reading the first reception time value (511) and the further first reception time value (521) ;
- the master network subscriber (100) sending a second telegram (420),
wherein the slave network subscriber (200, 201) receives the second telegram (420) at a second reception time value (512) of the local system time (210) of the slave network subscriber (200, 201) and stores the second reception time value (512),
wherein the further slave network subscriber (200, 202) receives the second telegram (420) at a further second reception time value (522) of the local system time (210) of the further slave network subscriber (200, 202) and stores the further second reception time value (522);
- the master network subscriber (100) reading the second reception time value (512) and the further second reception time value (522);
- the master network subscriber (100) calculating a speed parameter (230) of the local system time (210) of the slave network subscriber (200, 201) using the first reception time value (511) and the second reception time value (512),
wherein the master network subscriber (100) calculates a further speed parameter (230) of the local system time (210) of the further slave network subscriber (200, 202) from the further reception time values (521, 522);
- transmitting the speed parameter (230) to the slave network subscriber (200, 201) and the further speed parameter (230) to the further slave network subscriber (200, 202).

2. Method according to Claim 1,
wherein the network (10) has a reference clock (300),
wherein the reference clock (300) receives the first telegram (410) at a first reference time value (531) of a local system time (210) of the reference clock (300) and stores the first reference time value (531),
wherein the first reference time value (531) is read by the master network subscriber (100),
wherein the reference clock (300) receives the second telegram (420) at a second reference time value (532) of the local system time (210) of the reference clock (300) and stores the second reference time value (532),
wherein the second reference time value (532) is read by the master network subscriber (100),
wherein the speed parameter (230) is calculated from the reception time values (511, 512) and the reference time values (531, 532).

3. Method according to Claim 1,
wherein the master network subscriber (100) sends the first telegram (410) at a first reference time value (531) of a system time (110) of the master network subscriber (100),
wherein the master network subscriber (100) sends the second telegram (420) at a second reference time value (532) of the system time (110) of the master network subscriber (100),
wherein the speed parameter (230) is calculated from the reception time values (511, 512) and the reference time values (531, 532).

4. Method according to one of the preceding claims,
wherein the master network subscriber (100) calculates a reference time difference (530) as the difference between the first reference time value (531) and the second reference time value (532) and calculates a reception time difference (510) as the difference between the first reception time value (511) and the second reception time value (512),
wherein the master network subscriber (100) calculates the speed parameter (230) from the reference time difference (530) and the reception time difference (510).

5. Method according to one of the preceding claims,
wherein the second telegram (420) is sent between 0.1 seconds and 10 seconds after the first telegram (410), preferably between 0.2 seconds and 5 seconds after the first telegram (410).

6. Method according to one of the preceding claims,
wherein the first reception time value (511) is read by the master network subscriber (100) sending a first read telegram (415),
wherein the second reception time value (512) is read by the master network subscriber (100) sending a second read telegram (425) .

7. Method according to one of the preceding claims,
wherein the speed parameter (230) is transmitted by the master network subscriber (100) sending a transmission telegram (430).

8. Method according to one of the preceding claims,
wherein the method is performed during initialization of the network (10).

9. Method according to one of the preceding claims,
wherein the speed parameter (230) is stored in a non-volatile data memory (120) of the master network subscriber (100).

10. Method according to one of the preceding claims,
wherein the network (10) is an EtherCAT network.

## Revendications

1. Procédé de synchronisation temporelle dans un réseau (10) basé sur l'Ethernet,
le réseau (10) possédant au moins un périphérique de réseau maître (100), un périphérique de réseau esclave (200, 201) et un périphérique de réseau esclave supplémentaire (200, 202),
le procédé comprenant les étapes suivantes :
- envoi d'un premier télégramme (410) par le périphérique de réseau maître (100),
le périphérique de réseau esclave (200, 201) recevant le premier télégramme (410) à une première valeur temporelle de réception (511) d'un temps système local (210) du périphérique de réseau esclave (200, 201) et mémorisant la première valeur temporelle de réception (511),
le périphérique de réseau esclave supplémentaire (200, 202) recevant le premier télégramme (410) à une première valeur temporelle de réception supplémentaire (521) d'un temps système local (210) du périphérique de réseau esclave supplémentaire (200, 202) et mémorisant la première valeur temporelle de réception supplémentaire (521) ;
- lecture de la première valeur temporelle de réception (511) et de la première valeur temporelle de réception supplémentaire (521) par le périphérique de réseau maître (100) ;
- envoi d'un deuxième télégramme (420) par le périphérique de réseau maître (100),
le périphérique de réseau esclave (200, 201) recevant le deuxième télégramme (420) à une deuxième valeur temporelle de réception (512) du temps système local (210) du périphérique de réseau esclave (200, 201) et mémorisant la deuxième valeur temporelle de réception (512),
le périphérique de réseau esclave supplémentaire (200, 202) recevant le deuxième télégramme (412) à une deuxième valeur temporelle de réception supplémentaire (522) du temps système local (210) du périphérique de réseau esclave supplémentaire (200, 202) et mémorisant la deuxième valeur temporelle de réception supplémentaire (522) ;
- lecture de la deuxième valeur temporelle de réception (512) et de la deuxième valeur temporelle de réception supplémentaire (522) par le périphérique de réseau maître (100) ;
- calcul d'un paramètre de vitesse (230) du temps système local (210) du périphérique de réseau esclave (200, 201) en utilisant la première valeur temporelle de réception (511) et la deuxième valeur temporelle de réception (512) par le périphérique de réseau maître (100),
le périphérique de réseau maître (100) calculant un paramètre de vitesse supplémentaire (230) du temps système local (210) du périphérique de réseau esclave supplémentaire (200, 202) à partir des valeurs temporelles de réception supplémentaires (521, 522) ;
- transmission du paramètre de vitesse (230) au périphérique de réseau esclave (200, 201) et du paramètre de vitesse supplémentaire (230) au périphérique de réseau esclave supplémentaire (200, 202).

2. Procédé selon la revendication 1,
le réseau (10) possédant un générateur de temps de référence (300),
le générateur de temps de référence (300) recevant le premier télégramme (410) à une première valeur temporelle de référence (531) d'un temps système local (210) du générateur de temps de référence (300) et mémorisant la première valeur temporelle de référence (531),
la première valeur temporelle de référence (531) étant lue par le périphérique de réseau maître (100),
le générateur de temps de référence (300) recevant le deuxième télégramme (420) à une deuxième valeur temporelle de référence (532) du temps système local (210) du générateur de temps de référence (300) et mémorisant la deuxième valeur temporelle de référence (532),
la deuxième valeur temporelle de référence (532) étant lue par le périphérique de réseau maître (100),
le paramètre de vitesse (230) étant calculé à partir des valeurs temporelles de réception (511, 512) et des valeurs temporelles de référence (531, 532).

3. Procédé selon la revendication 1,
le périphérique de réseau maître (100) envoyant le premier télégramme (410) à une première valeur temporelle de référence (531) d'un temps système (110) du périphérique de réseau maître (100),
le périphérique de réseau maître (100) envoyant le deuxième télégramme (420) à une deuxième valeur temporelle de référence (532) du temps système (110) du périphérique de réseau maître (100),
le paramètre de vitesse (230) étant calculé à partir des valeurs temporelles de réception (511, 512) et des valeurs temporelles de référence (531, 532).

4. Procédé selon l'une des revendications précédentes, le périphérique de réseau maître (100) calculant une différence de temps de référence (530) en tant que différence entre la première valeur temporelle de référence (531) et la deuxième première valeur temporelle de référence (532) et calculant une différence de temps de réception (510) en tant que différence entre la première valeur temporelle de réception (511) et la deuxième valeur temporelle de réception (512),
le périphérique de réseau maître (100) calculant le paramètre de vitesse (230) à partir de la différence de temps de référence (530) et de la différence de temps de réception (510).

5. Procédé selon l'une des revendications précédentes, le deuxième télégramme (420) étant envoyé entre 0,1 seconde et 10 secondes après le premier télégramme (410), de préférence entre 0,2 seconde et 5 secondes après le premier télégramme (410).

6. Procédé selon l'une des revendications précédentes, la lecture de la première valeur temporelle de réception (511) s'effectuant par l'envoi d'un premier télégramme de lecture (415) par le périphérique de réseau maître (100),
la lecture de la deuxième valeur temporelle de réception (512) s'effectuant par l'envoi d'un deuxième télégramme de lecture (425) par le périphérique de réseau maître (100) .

7. Procédé selon l'une des revendications précédentes, la transmission du paramètre de vitesse (230) s'effectuant par l'envoi d'un télégramme de transmission (430) par le périphérique de réseau maître (100).

8. Procédé selon l'une des revendications précédentes, le procédé étant mis en œuvre pendant une initialisation du réseau (10).

9. Procédé selon l'une des revendications précédentes, le paramètre de vitesse (230) étant stocké dans une mémoire de données non volatile (120) du périphérique de réseau maître (100).

10. Procédé selon l'une des revendications précédentes, le réseau (10) étant un réseau EtherCAT.
